# EUROPÄISCHE PATENTSCHRIFT

(11) **EP 0 837 125 B1**
(45) Veröffentlichungstag und Bekanntmachung des Hinweises auf die Patenterteilung: **14.01.2004**
(21) Anmeldenummer: 97117888.4
(22) Anmeldetag: 15.10.1997
(51) Int. Cl.: C12C 13/02

(54) **Verfahren zur Würzekochung bei der Bierherstellung und Vorrichtung zur Durchführung des Verfahrens**
Method and apparatus for boiling wort during beer production
Procédé et appareil pour l'ébullition de moût au cours de la préparation de la bière

(30) Priorität: 16.10.1996 DE 19642757
(43) Veröffentlichungstag der Anmeldung: 22.04.1998
(73) Patentinhaber: Anton Steinecker Maschinenfabrik GmbH, 85356 Freising-Attaching (DE)
(72) Erfinder: Merz, Thomas, 91282 Betzenstein (DE); Meier, Peter, 84137 Vlistbiburg (DE)
(74) Vertreter: Grünecker, Kinkeldey, Stockmair & Schwanhäusser Anwaltssozietät

(56) Entgegenhaltungen:
- FR-A- 2 442 886
- ERASSME F: "Neuartige Mess- und Steuerungsmethode der Verdampfung bei Kochung mit externen Wärmetauschern." BRAUWELT 1994, Bd. 134, Nr. 43, 1994, Seiten 2238, 2247-2248, XP000956004

## Beschreibung

Die Erfindung betrifft ein Verfahren entsprechend dem Oberbegriff des Anspruchs 1 und eine Vorrichtung zur Durchführung dieses Verfahrens entsprechend dem Oberbegriff von Anspruch 5.

Bei der Bierherstellung wird die Würze nach dem Abläutern in einer Würzepfanne aufgeheizt und gekocht, um die Konzentration der Würze durch Verdampfen von Wasser in gewünschtem Maße zu erhöhen. Bei diesem Prozeß werden zudem Enzyme zerstört und die Würze sterilisiert. Eine solche Würzepfanne ist z.B. in DE 43 04 383 C1 beschrieben. Für den Heizprozeß ist entweder ein Innenkocher innerhalb der Würzepfanne vorgesehen oder ein sogen. Außenkocher außerhalb. Eine Würzepfanne mit Innenkocher ist z.B. in DE 43 04 383 C1 beschrieben. Eine Würzepfanne mit Außenkocher in dem europäischen Patent 265 908. Ebenso umfaßt der Begriff "Würzepfanne" auch eine kombinierte Whirlpool-/Würzepfanneneinrichtung.

Um festzustellen, wieviel der angestrebten Gesamtverdampfungsmenge bereits erreicht ist, hat man schon nach einer bestimmten Heizdauer, z.B. nach 60 Min., den Füllstand der Würze gemessen. Wenn festgestellt wurde, daß die angestrebte Gesamtverdampfungsmenge noch nicht erreicht ist, wurde der Kochvorgang fortgesetzt, solange bis die Füllstandsmessung ergibt, daß nun die Gesamtverdampfungsmenge erreicht ist.
Nachteilig dabei ist, daß man mit diesem Verfahren keine möglichst gleichmäßige Kochintensität über den gesamten Kochzeitraum verteilt erreichen kann. An sich wäre es jedoch wünschenswert, bei konstanter Kochzeit eine bestimmte Gesamtverdampfung mit einer gleichmäßig über den gesamten zur Verfügung stehenden Zeitraum zu bewirken. Dies fördert die Würzequalität.

Man hat deshalb auch schon vorgeschlagen (Brauwelt Nr. 43 (1994), Seiten 2238 bis 2248), den Verdampfungsprozeß über eine Dichtemessung zu regeln.

Üblicherweise wird dabei mit Biegeschwingern gearbeitet,durch die Würze gepumpt wird und deren Schwingungseigenschaften sich mit der Würzedichte ändern und die so zur Dichtebestimmung benutzt werden können. Solche Biegeschwinger haben den Nachteil, daß sie nicht immer genau arbeiten und sehr teuer sind. Außerdem verändern sich die Schwingungseigenschaften sehr schnell durch Ablagerungen von Würze, was eine komplizierte Reinigung nach sich zieht und entsprechende Spülanschlüsse und dergl. erfordert. Gemäß einer anderen Lösung kann zur Bestimmung der Dichte eine Ultraschallsonde eingesetzt werden. Ebenso wie bei den Biegeschwingern ist das Verfahren jedoch ungenau und aufwendig, da auch hier durch die Bildung von Würzebelag auf der Sonde Meßabweichungen entstehen. Beide Verfahren sind empfindlich gegenüber äußeren Einflüssen wie z.B. der Temperatur, die einen Einfluß auf die Dichte hat.

Ausgehend hiervon ist es daher die Aufgabe der vorliegenden Erfindung, ein Verfahren und eine Vorrichtung zur Verfügung zu stellen, die ohne komplizierte zusätzliche aufwendige Meßeinrichtungen eine kostengünstige Regelung der Heizleistung in einer Würzepfanne ermöglichen.

Diese Aufgabe wird durch ein Verfahren mit den Merkmalen des kennzeichnenden Teils des Anspruchs 1 und eine Vorrichtung mit den Merkmalen des kennzeichnenden Teils des Anspruchs 5 gelöst.

Mit diesen Merkmalen vermeidet das erfindungsgemäße Verfahren den Einsatz komplizierter empfindlicher zusätzlicher Meßeinrichtungen. Eine einfache Messung des Füllstandes wird dazu benutzt, die Heizenergie automatisch entsprechend der in der verbleibenden Kochzeit zu verdampfenden Würzemenge zu regeln. Die direkte Regelung der Heizleistung in Abhängigkeit der Messung ermöglicht einen einfachen und fehlerfreien Betrieb, der zu einer optimalen Energieausnutzung führt. Äußere Einflüsse und Verschmutzungen in der Würzepfanne haben keinen Einfluß auf den Füllstand, so daß die Messung gegen solche Störungen unempfindlich ist.

Zur Bestimmung des Füllstandes kann eigentlich jeder geeignete Füllstandsmesser, wie zb.kapazitive Sonden, Ultraschallsonden o.dgl eingesetzt werden, bevorzugt wird jedoch derzeit eine Druckmessung bei der offenen Kochung oder eine Differenzdruckmessung bei der Druckkochung.
Bei der Druckmessung liefert das Gewicht der Würze in der Würzepfanne das Messsignal, welches von äußeren Einflüssen unabhängig ist. Aus dem Gewicht der in der Würzepfanne befindlichen Würze kann sehr genau der Füllstand bestimmt werden.

Zur Absicherung gegen Meßgrößenstörungen können obere und untere Grenzwerte für die Meßgröße vorgesehen sein, bei deren Über- bzw. Unterschreitung die Heizleistung nicht nachgeregelt wird. Mit Hilfe solcher Grenzwerte kann verhindert werden, daß kurzfristige Meßgrößenschwankungen in Abhängigkeit des vorhandenen Kochbildes in der Würzepfanne die Füllstandsmessung und Heizleistungsregelung beeinflussen.

In der erfindungsgemäßen Vorrichtung zur Steuerung der Verdampfung und Aufheizung von Würze in einer Würzepfanne zur Durchführung des Verfahrens ist eine Reglereinheit vorgesehen, die aus einem kontinuierlich bzw. zyklisch bestimmten Füllstandswert in der Würzepfanne und einem Sollwert für die Endmenge (Ausschlagmenge) der Würze die Heizleistung während der verbleibenden Kochzeit berechnet und entsprechend direkt nachregelt.

Vorteilhafte Ausgestaltungen dieser Vorrichtung umfassen ein Druckmeßgerät als Füllstandsmesser bzw. Einen PID-Regler zur Steuerung für die Heizleistung.

Die beschriebene Vorrichtung kann ebenso in einer Würzepfanne mit einem Innenkocher wie bei einer Würzepfanne mit Außenkocher eingesetzt werden.

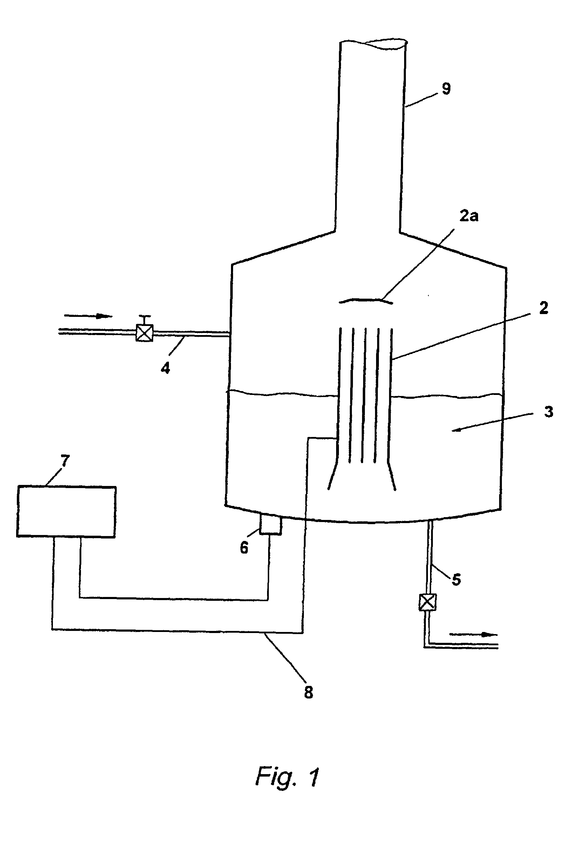

Im folgenden wird das erfindungsgemäße Verfahren und die erfindungsgemäße Vorrichtung in Verbindung mit der Figur erläutert. Dabei stellt Figur schematisch eine erfindungsgemäße Vorrichtung zum Würzekochen dar, mit der das erfindungsgemäße Verfahren durchgeführt werden kann.

Die Figur zeigt eine Würzepfanne 1 in der speziellen Ausführungsform mit einem Innenkocher 2. Die Würze 3 wird über eine Zuführungsleitung 4, z.B. aus dem nicht gezeigten Läuterbottich, in die Würzepfanne eingeführt. Innerhalb der Würzepfanne 1 befindet sich ein zentraler Innenröhrenkocher 2, der auf Stützen gelagert ist. Die Würze wird innerhalb dieses Kochers aufgeheizt und dadurch nach oben gezogen. Beim Austritt aus dem Innenkocher 2 wird die Würze z.B. durch einen Umlenkschirm 2a wieder in der Würzepfanne verteilt. Während des Kochvorganges wird der entstehende Dampf durch einen Abzug 9 abgeführt. Am Ende des Kochvorganges wird die verbleibende Würze durch die Ausschlagleitung 5 entnommen.

Die gewünschte Ausschlagmenge, d.h. verbleibende Würzemenge nach dem Verdampfen und die dazu verwendete Heizdauer, z.B. 70 bis 90 Minuten, werden im voraus festgelegt.

Während des Kochens wird im wesentlichen Wasser aus der Würze verdampft, wodurch die Flüssigkeitsmenge in der Würzepfanne 1 verringert wird. Dies führt zu einer entsprechenden Gewichtsabnahme.

Diese Gewichtsabnahme wird durch einen Druckmeßsensor 6 bestimmt, der z.B. in dem Boden der Würzepfanne 1 integriert ist. Das kontinuierlich bzw. in sehr kurzen Abständen gemessene Drucksignal wird in dem Druckmeßsensor 6 in ein elektrisches Signal umgewandelt, das an die Reglereinheit 7 gegeben wird. Diese Einheit 7 bestimmt aus dem gemessenen Druckwert über das Gewicht den Füllstand in der Würzepfanne 1 und vergleicht ihn mit einem vorher bestimmten Sollwert für die Endmenge, die nach dem Heizvorgang in der Würzepfanne verbleiben soll (der sogen. Ausschlagmenge). Aus der Differenz dieser beiden Werte berechnet die Reglereinheit 7 die noch zu verdampfende Menge und bestimmt daraus die Heizleistung, die nötig ist, um in der vorbestimmten Kochzeit die restliche zu verdampfende Menge Würze zu verdampfen. Dann regelt die Reglereinheit 7, die beispielsweise einen dem herkömmlichen Dampfdruckregler vorgeschalteten PID-Softwareregler umfassen kann, über eine Steuerleitung 8 diese Heizleistung an dem Kocher direkt nach. Dieser Prozeß wird kontinuierlich bzw. zyklisch durchgeführt.

Auf diese Weise wird erreicht, daß immer mit der optimalen Heizleistung in der Würzepfanne gearbeitet wird. Die Verdampfung geschieht gleichmäßig über die gesamte Kochzeit. Dadurch ist im speziellen ein energiesparender Betrieb möglich.

Übersteigt der Meßwert des Drucksensors 6 einen vorbestimmten Wert oder unterschreitet eine vorgegebene Grenze, so wird die Heizleistung von der Steuerung 7 nicht entsprechend diesem Druckwert geregelt. Auf diese Weise wird verhindert, daß kurzfristige Schwankungen in der Inhaltsanzeige in Abhängigkeit des entstehenden Kochbildes in der Würzepfanne 1 in die Regelung der Heizleistung einbezogen werden. Dies erhöht die Gleichmäßigkeit des Kochvorganges.

Das erfindungsgemäße Verfahren und die erfindungsgemäße Vorrichtung ermöglichen also eine kostengünstige, einfache und genaue Steuerung des Aufheiz- und Verdampfungsvorganges in einer Würzepfanne. Da das gemessene Gewicht der Würze unabhängig von äußeren Einflüssen und Verschmutzungen ist, ist das Verfahren gegenüber derartigen Störungen unempfindlich.

## Patentansprüche

1. Verfahren zur Steuerung des Aufheiz- und Verdampfungsvorganges von Würze bei der Bierherstellung in einer Würzepfanne mit einem Kocher, bei dem durch Vergleich einer kontinuierlich bzw. zyklisch gemessenen Meßgröße mit einem Sollwert die benötigte Heizenergie geregelt wird,
**dadurch gekennzeichnet, daß**
als Meßgröße der Füllstand in der Würzepfanne (1)zyklisch oder kontinuierlich erfaßt und dann durch Vergleich mit einem Sollwert die in der festgelegten Kochzeit noch zu verdampfende Würzemenge errechnet wird und dann daraus die benötigte Heizleistung des Kochers (2) derart bestimmt und kontinuierlich bzw. zyklisch entsprechend dieser Berechnung nachgeregelt wird, daß innerhalb der festgelegten Kochzeit die gewünschte Gesamtverdampfung erreicht wird.

2. Verfahren nach einem der bisherigen Ansprüche,
**dadurch gekennzeichnet, daß**
der Füllstand aus einer Druckmessung bestimmt wird.

3. Verfahren nach einem der bisherigen Ansprüche,
**dadurch gekennzeichnet, daß**
obere und untere Grenzwerte für die Meßgröße vorgegeben werden, bei deren Über- bzw. Unterschreitung die Heizleistung nicht nachgeregelt wird.

4. Vorrichtung zur Steuerung des Aufheiz- und Verdampfungsvorganges von Würze in einer Würzepfanne bzw. einem mit einem Meßgerät für den Füllstand,
**dadurch gekennzeichnet, daß**
das Meßgerät (6) direkt mit einer Steuerung (7) verbunden ist, die aus dem Füllstand in der Würzepfanne (1) die Heizleistung bestimmt, die während der verbleibenden Kochzeit eingesetzt werden muß, um die gewünschte Würzemenge in der festgelegten Kochzeit zu verdampfen, und die Heizleistung entsprechend direkt nachregelt.

5. Vorrichtung nach Anspruch 5,
**dadurch gekennzeichnet, daß**
der Füllstandsmesser (6) ein Druckmeßgerät ist.

6. Vorrichtung nach einem der Ansprüche 4 oder 5,
**dadurch gekennzeichnet, daß**
die Reglereinheit (7) einen PID-Regler umfaßt.

## Claims

1. Method for controlling the process of heating up and evaporating wort during beer production in a wort vessel with a boiler, in which the required heating energy is controlled by comparison of the measured variable, which is continuously or intermittently measured, with a setpoint value, **characterized in that** the filling level in the wort vessel (1) is intermittently or continuously sensed as the measured variable and then, by comparison with a setpoint value, the amount of wort still to be evaporated in the fixed cooling time is calculated and then the required heating output of the boiler (2) is determined from this and it is continuously or intermittently corrected in accordance with this calculation in such a way that the desired overall evaporation is achieved within the fixed boiling time.

2. Method according to the previous claim, **characterized in that** the filling level is determined from a pressure measurement.

3. Method according to one of the previous claims, **characterized in that** upper and lower limit values, above and below which the heating output is not corrected, are prescribed for the measured variable.

4. Apparatus for controlling the process of heating up and evaporating wort in a wort vessel with a measuring gauge for the filling level, **characterized in that** the measuring gauge (6) is directly connected to a controller (7), which determines from the filling level in the wort vessel (1) the heating output which must be used during the remaining boiling time to evaporate the desired amount of wort in the fixed boiling time, and directly corrects the heating output accordingly.

5. Apparatus according to Claim 4, **characterized in that** the filling level gauge (6) is a pressure measuring gauge.

6. Apparatus according to either of Claims 4 and 5, **characterized in that** the controller unit (7) is a PID controller.

## Revendications

1. Procédé de contrôle de l'opération de chauffage et d'évaporation de moût au cours de la préparation de la bière dans une cuve à houblonner comportant une chaudière, dans lequel l'énergie de chauffage requise est réglée par comparaison d'une grandeur de mesure mesurée en continu ou de façon cyclique avec une valeur de consigne, **caractérisé en ce que** le niveau dans la cuve à houblonner (1) est enregistré de façon cyclique ou en continu en tant que grandeur de mesure, la quantité de moût restant à évaporer dans la durée d'ébullition fixée est calculée par comparaison avec une valeur de consigne, et la puissance calorifique requise de la chaudière (2) en est déterminée et réajustée en continu ou de façon cyclique en fonction de ce calcul de telle sorte que l'évaporation totale souhaitée est obtenue dans le cadre de la durée d'ébullition fixée.

2. Procédé suivant l'une des revendications précédentes, **caractérisé en ce que** le niveau est déterminé à partir d'une mesure de pression.

3. Procédé suivant l'une des revendications précédentes, **caractérisé en ce que** des seuils supérieurs et inférieurs sont prédéfinis pour la grandeur de mesure, la puissance calorifique n'étant pas réajustée lors de leur franchissement respectivement vers le haut et vers le bas.

4. Appareil pour le contrôle de l'opération de chauffage et d'évaporation de moût dans une cuve à houblonner munie d'un appareil de mesure du niveau, **caractérisé en ce que** l'appareil de mesure (6) est relié directement à une commande (7), qui détermine à partir du niveau dans la cuve à houblonner (1) la puissance calorifique qui doit être utilisée pendant la durée d'ébullition résiduelle pour évaporer la quantité de moût souhaitée dans la durée d'ébullition fixée, et qui réajuste directement en conséquence la puissance calorifique.

5. Appareil suivant la revendication 5, **caractérisé en ce que** le mesureur de niveau (6) est un manomètre.

6. Appareil suivant l'une des revendications 4 et 5, **caractérisé en ce que** l'unité de régulation (7) comprend un régulateur PID.
